# EUROPÄISCHE PATENTSCHRIFT

(11) **EP 2 964 404 B1**
(45) Veröffentlichungstag und Bekanntmachung des Hinweises auf die Patenterteilung: **10.05.2017**
(21) Anmeldenummer: 14709268.8
(22) Anmeldetag: 10.03.2014
(51) Int. Cl.: B21B 1/26, B21B 45/00

(54) **VERFAHREN ZUM HERSTELLEN EINES METALLBANDES DURCH GIESSWALZEN**
METHOD FOR PRODUCING A METAL STRIP BY CASTING AND ROLLING
PROCÉDÉ DE PRODUCTION D'UNE BANDE MÉTALLIQUE AU MOYEN DE CYLINDRES DE COULÉE

(30) Priorität: 08.03.2013 DE 102013204059; 14.03.2013 DE 102013204434
(43) Veröffentlichungstag der Anmeldung: 13.01.2016
(73) Patentinhaber: SMS group GmbH, 40237 Düsseldorf (DE)
(72) Erfinder: KLEIN, Christoph, 57223 Kreuztal-Eichen (DE); BILGEN, Christian, 40477 Düsseldorf (DE); KLINKENBERG, Christian, 58313 Herdecke (DE); PANDER, Michael, 50739 Köln (DE); NEUMANN, Luc, 40223 Düsseldorf (DE); ROSENTHAL, Dieter, 57572 Niederfischbach (DE); CECERE, Cosimo Andreas, 40764 Langenfeld (DE)
(74) Vertreter: Klüppel, Walter
(86) Internationale Anmeldenummer: PCT/EP2014/054612
(87) Internationale Veröffentlichungsnummer: WO 2014/135710

(56) Entgegenhaltungen:
- DE-A1- 4 402 402

## Beschreibung

Die Erfindung betrifft ein Verfahren zum Herstellen eines Metallbandes durch Gießwalzen, bei dem zunächst in einer Gießmaschine eine Bramme durch Ausbringen von Metall aus einer Kokille gegossen wird, wobei die Bramme im Bereich einer Strangführung von der Vertikalen in die Horizontale umgelenkt wird, wobei die Bramme anschließend in einem Ofen temperiert wird, wobei die Bramme hinter dem Ofen in einer Walzstraße gewalzt wird, wobei die Bramme in Abhängigkeit von einer vorgegebenen Betriebsweise entweder im diskontinuierlichen Batch-Betrieb oder im Endlos- bzw. Semi-Endlos-Betrieb bearbeitet wird, wobei die zu walzende Bramme bzw. das walzende Metallband im Bereich der Walzstraße zumindest zwischen zwei Walzgerüsten einer Erhitzung mittels eines Induktors unterzogen wird.

Ein gattungsgemäßes Verfahren offenbart die DE 44 02 402 A1.

Die vorliegende Erfindung kommt bei Gieß-Walz-Anlagen zum Einsatz, die in einem ersten Betriebsmodus, nämlich im Endlosbetrieb oder Semi-Endlosbetrieb, als auch und/oder im Batch-Betrieb aus flüssigem Metall ein fertiges Band herstellen.
werden nach dem Gießen bzw. dem Gieß-Walzen die Brammen bzw. Vorbänder so in Einzelbrammen bzw. Einzel-Vorbänder getrennt, dass nach dem Warmwalzen Coils einer gewünschten Größe entstehen.

Dabei werden zunächst Stranggussbrammen gegossen. Diese Brammen werden mittels Scheren zerteilt, die in Ihren Abmessungen später die jeweils gewünschte Coilgröße ergeben. In Wärmeöfen, oftmals als Rollenherdofen ausgeführt, werden die abgeteilten Brammen in der Temperatur konditioniert. Zusätzlich dient der Ofen als Puffer, in dem Brammen bei Verzögerungen im Verarbeitungsprozess, gespeichert werden können. Anschließend werden die Brammen einzeln einer Walzstrasse zugeführt und ausgewalzt. Dann werden die fertig gewalzten Bänder in einer Kühlstrecke abgekühlt und aufgehaspelt. Die Coils verlassen die Walzlinie zur weiteren Verarbeitung. Die DE 10 2009 057 524 A1 offenbart ein Verfahren und ein Walzwerk zum Warmwalzen eines Metallbandes oder Metallblechs in mehreren Schritten.

Beim Semi-Endlos-Verfahren werden die Brammen so geschnitten, dass zwei oder mehr Coils aus dieser Bramme erzeugt werden können. Hinter dem Walzwerk ist eine fliegende Schere angeordnet, die das lange Warmband zerteilt, so dass die gewünschte Coilgröße erreicht wird. Mit diesem Verfahren wird die Anzahl der beim Walzen kritischen Ein- und Ausfädel-Prozesse reduziert, so dass dünnere Warmbänder sicherer erzeugt werden können.

Beim Endlos-Verfahren werden die stranggegossenen Brammen unzerteilt dem Walzwerk zugeführt. Hinter dem Walzwerk ist, wie beim Semi-Endlos-Verfahren, eine fliegende Schere angeordnet, die das lange Warmband zerteilt, so dass die gewünschte Coilgröße erreicht wird. Mit diesem Verfahren wird die Anzahl der beim Walzen kritischen Ein- und Ausfädel-Prozesse im Vergleich zum Semi-Endlos-Verfahren weiter reduziert, so dass eine größere Anzahl dünner Warmbänder sicherer erzeugt werden können.

Bei den hier eingesetzten CSP-Anlagen (Compact Strip Production) handelt es sich also um Gießwalzanlagen, bei denen zwei getrennt arbeitende Prozessstufen zur Produktion von Stahlbändern eng miteinander verknüpft sind, nämlich das Gießen des flüssigen Stahls zu Dünnbrammen in der Gießanlage und das Walzen der Dünnbrammen zu Stahlbändern in der Walzanlage. Dabei erfolgt üblicherweise das Walzen des vorab gegossenen Strangs direkt unter Ausnutzung der Gießhitze oder durch Einstellung der gewünschten Walztemperatur mittels eines Ausgleichsofens oder einer Aufheizvorrichtung zwischen Gießanlage und Walzstraße.

Der Erfindung liegt die Aufgabe zugrunde, Prozessbedingungen zu schaffen, mit denen für alle in Rede stehende Betriebsmodi, also sowohl für den Batch-Betrieb als auch für den Endlos- bzw. Semi-Endlosbetrieb, eine optimale Fertigung eines Metallbandes erfolgen kann. Demgemäß sollen also optimale Prozessbedingungen für alle gewünschten Betriebsmodi geschaffen werden.

Die Lösung dieser Aufgabe durch die Erfindung ist dadurch gekennzeichnet, dass als Induktor ein Element verwendet wird, das mindestens eine offene, teilbare, C-förmige Induktionsspule umfasst, wobei der Induktor ausgebildet ist, um die in Förderrichtung vorbeigeführte Bramme oder das Metallband durch induktive Quer-oder Längsfelderwärmung zu erhitzen, wobei die Induktionsspulen der Induktoren, je nach Bedarf, zur Erzeugung von Längs- oder Querfeldinduktion geschaltet werden.

Zu den jeweiligen Felderwärmungen finden sich weiter unten Erläuterungen.

Die Walzstraße ist dabei bevorzugt eine Tandem-Walzstraße, wobei eine Erhitzung mittels des Induktors bevorzugt zwischen den in Förderrichtung ersten beiden Walzgerüsten der Tandem-Walzstraße erfolgt. Es ist aber auch gemäß einer anderen bevorzugten Ausgestaltung des Verfahrens möglich, dass die Walzstraße eine Tandem-Walzstraße ist, wobei eine Erhitzung mittels des Induktors zwischen den in Förderrichtung ersten drei Walzgerüsten der Tandem-Walzstraße erfolgt.

Die Bramme kann gemäß einer weiteren bevorzugten Lösung im Bereich der Strangführung durch eine Anzahl von Rollen einer Dickenreduktion unterzogen werden.

Die Bramme kann auch hinter der Gießmaschine und vor dem Ofen in einem Vorwalzgerüst einer Dickenreduktion unterzogen werden.

Die Gieß-Walz-Anlage kann aus einem oder mehreren Vorgerüsten und einer Walzstraße bestehen, wobei im Batch-Betrieb ein Trennen der Bramme vor der Walzstraße erfolgt, vorzugsweise spätestens nach fünf der Walzstraße voranstehenden Vorgerüsten.

Die Gieß-Walz-Anlage kann auch aus einem oder mehreren Vorgerüsten und einer Walzstraße bestehen, wobei im Endlos-Betrieb ein Trennen der Bramme nach dem letzten Gerüst der Walzstraße erfolgt.

Weiterhin kann vorgesehen sein, dass in allen vorgenannten Betriebsmodi ein Trennen der Bramme vor dem Ofen erfolgt. Wenn dem Ofen voranstehenden Vorgerüsten vorgesehen sind, erfolgt das Trennen der Brammen vorzugsweise spätestens nach diesen Vorgerüsten.

Die vorgeschlagene Vorgehensweise ermöglicht also eine Kombination von Endlos- und Stückerzeugung (Batchbetrieb) von Warmband über Dünnbrammenanlagen sowie eine Erzeugung von warmgewalztem Stahlband und -blech mit gleichmäßiger Mikrostruktur und mechanischen Eigenschaften in dicken und dünnen Warmbandabmessungen.

Die Kombination einer Endlosfahrweise, Semi-Endlos-Fahrweise und des Batchbetriebs erfolgt auf der gleichen Dünnbrammenanlage mit dem Ziel, die Vorteile aller Verfahren in einer Anlage zu vereinen und damit die wirtschaftliche Erzeugung von dickem und dünnem Warmband aus Dünnbrammen in einer Hybrid-Anlage zu ermöglichen.

Bisher mussten sich Warmbandhersteller bei der Wahl der Produktionsanlage für eine Art der Anlage, also für das Endlos-Verfahren oder den Semi-Endlos- oder Batchbetrieb, entscheiden. Diese Entscheidung ist aufgrund der Anlagenausführung nicht revidierbar. Da sich beide Anlagenkonzepte im Produktportfolio unterscheiden, fällt damit auch eine Entscheidung über das Marktsegment, das der Betreiber bedienen kann.

Die bisher existierenden Endlosanlagenkonzepte ermöglichen ausschließlich die stabile Herstellung von Warmbändern mit stark eingeschränkter Geometrie (Bänder mit weniger als 2 mm Dicke). Warmbänder abweichender Geometrie lassen sich auf diesen Anlagen in der Regel nicht in Endlosfahrweise herstellen. Bei zunehmender Warmbanddicke sinkt beispielsweise die Auslaufgeschwindigkeit auf der Walzstraße und somit die Endwalztemperatur. Auch erfordern die bisher für den Endlos-Betrieb verfügbaren Anlagenkonzepte im Falle kleiner Störungen des Betriebs oder für den Arbeitswalzenwechsel eine Unterbrechung der Produktion. Das geschieht in der Praxis entweder durch Ausfördern des Gießstrangs und Abbruch der Gießsequenz oder durch Schneiden und Entfernen von Zwischenbrammensegmenten aus der Produktionsanlage. Der dadurch verursachte Ausschuss reduziert die Ausbringung und die Wirtschaftlichkeit einer solchen Anlage, die auf den reinen Endlosbetrieb ausgerichtet ist.

Anlagen für den Batch-Betrieb können ein breiteres Spektrum von Warmbändern verschiedener Abmessungen und Stahlsorten erzeugen. Allerdings gibt es gewisse Einschränkungen im Bereich sehr dünner Abmessungen. So ist das Auftreten von Betriebsstörungen in der Walzstraße (z. B. Hochgeher) bei der Erzeugung sehr dünner Bänder im Batch-Betrieb höher als im Endlos-Betrieb. Darüber hinaus ist der Arbeitswalzenverschleiß im Endlos-Betrieb geringer als im Batch-Betrieb.

Die vorliegende Erfindung ermöglicht erstmals die Kombination von Batch-, Semi-Endlos- und Endlos-Betrieb in einer Hybrid-Anlage. Dadurch werden die vorgenannten Einschränkungen aufgehoben. Die erläuterte Vorgehensweise ermöglicht in einer Anlage die Produktion von dickem Warmband, beispielsweise für die Rohrfertigung, und die Produktion von dünnem und ultra-dünnem Warmband bis unter 0,8 mm Dicke. Die kombinierte Fahrweise einer solchen Anlage ermöglicht durch Umschalten von Endlos- auf Batch-Betrieb einen Arbeitswalzenwechsel, ohne die Gießsequenz abbrechen zu müssen oder Ausschuss zu generieren.

Demgemäß wird eine Anlagenkonfiguration vorgeschlagen, die eine Batch-, Semi-Endlos- und Endlos-Fahrweise gleichermaßen ermöglicht. Dazu werden vorbekannte Vorrichtungen (s. z. B. die Ausführungen in der DE 44 02 402 A1 und in der WO 2011/067315 A1) bestehend aus mindestens jeweils einer Dünnbrammengießmaschine, einem Tunnelofen und einer Walzstraße mit einer zumindest zwischen dem ersten und zweiten Gerüst befindlicher Induktionsheizung ergänzt. Die Induktionsheizung ist bevorzugt als teilbarer Längsfeldinduktor ausgeführt. Ferner können weitere Aggregate vorgesehen werden, die zusätzlich zum Batch- auch den Endlos- und Semi-Endlos-Betrieb zulassen.

Dies sind insbesondere Gießmaschinen mit hohem Massefluss, bevorzugt solche, bei denen die Biegung des Stranges aus der Vertikalen in die Horizontale während der Durcherstarrung des Brammenkerns stattfindet. Dies erhöht die Produktionskapazität und die Endwalztemperatur, insbesondere im Endlosbetrieb.

Ferner können ein oder mehrere Vorwalzgerüste zwischen der Gießmaschine und dem Tunnelofen vorgesehen werden. Eine der bevorzugten Ausführungen hierfür sind Inline-Walzgerüste, die auch als C.R. ("Core-Reduction") Gerüste bezeichnet werden.

Des Weiteren kann vor dem Ofen eine Induktionsheizung vorgesehen werden, um Temperaturverluste zwischen Gießmaschine und Ofen zu kompensieren. Das ermöglicht beispielsweise eine größere Produktivität im Batch- und/oder Semi-Endlos-Betrieb, da die Aufheizzeit im Ofen komplett oder zum Teil entfallen kann.

Dann kann auch eine fliegende Schere mit Haspeln vorgesehen werden. Diese Haspel können als Unterflur- und/oder Rotorhaspel (wie zum Beispiel in EP 1003 617 B1 dargestellt) ausgeführt sein. Im Betriebsmodus Endlos und Semi-Endlos ist bevorzugt mindestens ein Haspel, zum Beispiel Rotorhaspel, vorgesehen.

An geeigneten Stellen des Produktionsweges, beispielsweise vor dem Einlauf in die Walzstraße, können weitere Induktionsheizungen die vorgeschlagene Verfahrensweise noch flexibler hinsichtlich des erzeugbaren Produktspektrums machen. Sie ermöglichen gegebenenfalls auch, den jeweils günstigeren Energieträger (Gas im Ofen oder Strom in den Induktoren) auszuwählen.

Die vorgeschlagene Vorgehensweise ermöglicht das Bedienen eines breiteren Marktsegments. Der Betreiber der Anlage kann den für sein Produkt günstigsten Herstellungsmodus wählen. Der Betreiber kann eine Anlage für den Batch- oder den Endlos-Betrieb erwerben, die auf die vorgeschlagene Verfahrensweise erweiterbar ist. Eine solche erweiterbare Anlage ist somit ein Aspekt der vorgeschlagenen Lösung.

Die beschriebene Vorgehensweise ermöglicht sowohl die Produktion von Warmband für die Rohrfertigung, insbesondere nach API oder entsprechenden Normen, in Warmbanddicken bis weniger als ein Viertel der Brammendicke, als auch die Produktion von dünnem Warmband bis weniger als 0,8 mm.

Ein weiterer Vorteil besteht darin, dass jeweils die energetisch günstigste Produktionsweise gewählt werden kann. Das bedeutet, für geringe Warmbanddicken würde in der Regel die Endlos-Fahrweise bevorzugt werden. Dickere Warmbänder würden energetisch am günstigsten in der Batch-Betriebsweise hergestellt werden.

Im Vergleich zu einer reinen Endlos-Anlage hat die vorgeschlagene Anlage eine wesentlich höhere Produktionskapazität, da ein Batch-Betrieb mit zwei Strängen möglich ist.

Das vorgeschlagene Walzwerkskonzept stellt also auf eine beliebige Anordnung von Induktionsheizungen (Induktoren) zwischen den Walzgerüsten ab. Die Induktoren sind nach einer möglichen Ausgestaltung zwischen den ersten beiden Gerüsten einer Tandem-Walzstraße in einer CSP-Anlage zur Herstellung von hochfesten Stahlgüten vorgesehen, um eine Einstellung eines gleichmäßigen Warmbandgefüges durch vollständige Rekristallisation zu erreichen. Möglich ist es gemäß einer weiteren bevorzugten Ausgestaltung auch, dass die Induktoren zwischen den ersten drei Gerüsten einer Tandem-Walzstraße einer CSP-Anlage zur Herstellung von Produkten in Endlosfahrweise angeordnet sind, wodurch gleichermaßen eine Sicherstellung der notwendigen Endwalztemperatur erfolgen kann.

Die Nutzung der eingesetzten Induktionsheizung ermöglicht die Minimierung der erreichbaren Endbanddicken. Durch eine Erhöhung der Temperatur wird eine Herabsenkung der Walzkräfte erreicht.

Die Nutzung der eingesetzten Induktionsheizung dient auch zur Maximierung der erreichbaren Endbanddicken von hochfesten Stahlsorten (z. B. API-Güten).

Die Einlaufdicke des Walzguts in die Walzstraße liegt bevorzugt zwischen 10 mm und 120 mm.

Die vorgeschlagene Vorgehensweise wird auch in Kombination mit der Walzstrasse voranstehenden Vorgerüsten vorgesehen. Dabei sind vorzugsweise CR-Gerüste ("Core-Reduction"-Gerüste) vorgesehen, wobei eine "Inline"-Fertigung vorgesehen werden kann, d. h. die Vorwalzgerüste sind am Auslauf der Gießmaschine angeordnet. Das betriebsmodusbedingte Trennen der Brammen erfolgt bei Batch-, Semi-Endlos- und Endlos-Betrieb nach Verlassen der Vorwalzgerüste im weiteren Verlauf der Fertigungslinie.

Zu den einzelnen Betriebsmodi sei folgendes bemerkt:

Beim Batch-Betrieb erfolgt ein Trennen (betriebsmodusgemäß) der stranggegossenen Bramme vor der Walzstraße, vorzugsweise spätestens nach dem letzten, der Walzstraße voranstehenden Vorgerüst.

Im Endlos-Verfahren werden die stranggegossenen Brammen (betriebsmodusgemäß) unzerteilt dem Walzwerk zugeführt. Das Trennen der fertig gewalzten Warmbänder erfolgt nach dem letzten Gerüst der Walzstraße.

Beim Semi-Endlos-Betrieb erfolgt ein Trennen (betriebsmodusgemäß) einer überlangen, stranggegossenen Bramme vor dem Tunnelofen, vorzugsweise spätestens nach dem letzten, dem Ofen voranstehenden Vorgerüst. Die dementsprechend maximale Brammenlänge entspricht der Länge des Tunnelofens. Diese lange Bramme wird unzerteilt ausgewalzt und das fertig gewalzte Warmband nach dem letzten Gerüst der Walzstraße in Coillänge getrennt.

Die Vorzüge der einzelnen Betriebsweisen ergeben sich wie folgt:

Im Batch-Betrieb lassen sich stahlsortenabhängig, dicke Warmbandabmessungen von rund 1 mm bis über 25 mm erzeugen. Hohe Abnahmen in den ersten beiden Gerüsten der Walzstraßen und/oder thermomechanisches Walzen von höherfesten Stählen erfordern vollständige Rekristallisation nach den beiden ersten Gerüsten der Walzstraße. Dazu kann eine Induktionsheizung zwischen den beiden Gerüsten eingefügt werden, ggf. auch zwischen den folgenden beiden Gerüsten der Walzstraße aus dem gleichen Grund.

Beim Endlos-Betrieb führt der durch Gießformat und -geschwindigkeit vorgegebene Massenfluss zu einer niedrigen Endwalzgeschwindigkeit und damit zu niedrigen Endwalztemperaturen. Zum Ausgleich können Induktionsheizungen zwischen einzelnen Gerüsten angebracht werden. Dahingegen können dünne Abmessungen, typischerweise weniger als 2 mm Warmbanddicke, in Batchfahrweise mit verringerter Gefahr von Hochgehern ("Cobbles") produziert werden, da diese meist beim Einfädeln des Brammen- bzw. Zwischenbandkopfes in die Gerüste der Walzstraße auftreten. Im Unterschied zum Batch-Betrieb sind in Endlos-Betrieb Warmbanddicken von mehr als 2 mm aufgrund niedriger Auslaufgeschwindigkeiten der Walzstraße schwierig herzustellen.

Bei der sogenannten Hybrid-Fahrweise handelt es sich um eine kombinierte Betriebsweise. Hier sollen mindestens zwei der Betriebsweisen "Batch", "Endlos" und "Semi-Endlos" ohne Qualitäts- und Produktivitätsverluste ermöglicht werden.

Eine besondere Aufgabe besteht darin, den unterschiedlichen Anforderungen an die Position und die Charakteristik der Induktionsheizung gerecht zu werden. Dicke Abmessungen erfordern in der Regel Induktionsheizung mit Erwärmung im Längsfeld. Für Walzungen im Batch-Mode sind daher in der Regel Längsfeld-Induktoren notwendig. Dünne Abmessungen im Endlosbetrieb erfordern hingegen in der Regel Induktionsheizungen mit Erwärmung im Querfeld. Im Semi-Endlosbetrieb können beide Induktortypen erforderlich sein, da hier aufgrund der von der Gießgeschwindigkeit unabhängigen Walzgeschwindigkeit sowohl dünne Fertigbänder mit einer Dicke von weniger als 2 mm als auch dickere Fertigbänder mit einer Dicke von mehr als 2 mm gewalzt werden können.

Eine Hybridanlage muss daher in der Lage sein, wenigstens einen der genannten Induktionsheizungstypen oder beide gemeinsam einzusetzen. Diese Induktionsheizungen können je nach Anforderung an unterschiedlichen Positionen im Prozessablauf eingesetzt werden. Die hohe Flexibilität der Anlage wird dabei z. B. durch den Einsatz von offenen, teilbaren, C-förmigen Induktionsspulen gewährleistet. Die spezielle Spulenwicklung erlaubt es, bei Bedarf zwischen Längs- und Querfeldinduktion zu wählen. Zusätzlich lässt sich die Spaltweite zwischen Walzgut und Innenseite der Spule für einen optimalen Wirkungsgrad anpassen.

Zur Längsfeld-Erwärmung, die als solche bekannt ist, wird auf die US 2 448 011 hingewiesen. Hier wird eine Vorrichtung zur Längsfelderwärmung von Stahlbändern offenbart, bei der das zu erwärmende Stahlband durch den Innenraum einer zylindrischen Induktionsspule geführt wird, die in dem Metallgut ein magnetisches Wechselfeld erzeugt, dessen Kraftlinien parallel zur Ebene des Metallguts verlaufen, d. h. es handelt sich hier um das Längsfeld-Prinzip.

Zur Querfeld-Erwärmung wird auf die EP 0 246 660 und auf die DE 42 34 406 A1 hingewiesen. Vorbekannt ist hieraus eine Vorrichtung zur induktiven Querfelderwärmung von Flachgut, wobei im erstgenannten Dokument eine aus Hauptspulen und Hilfsspulen bestehende Gesamtanordnung vorgesehen ist. Die Hauptspulen sind senkrecht zur Bewegungsrichtung des Flachgutes angeordnet und überragen die beiden äußeren Kanten des Flachgutes. Die Hilfsspulen verlaufen parallel zur Bewegungsrichtung des Flachgutes und sind in der Nähe der Kanten des Flachgutes angeordnet, ohne diese jedoch zu überragen. Durch die Kombination von Haupt- und Hilfsspulen wird ein gleichmäßiges Temperaturprofil über die gesamte Breite des Flachgutes erzielt. Die Hauptspulen erwärmen insbesondere den Mittelbereich sowie die beiden unmittelbaren Kantenbereiche des Flachgutes, jedoch entstehen in der Nähe der Kanten und parallel zu diesen Zonen geringerer Temperatur. Diese Zonen in der Nähe der Kanten werden durch die Hilfsspulen nacherwärmt, so dass sich eine gleichmäßige Temperaturverteilung über die gesamte Breite des Flachgutes einstellt.

In der Zeichnung sind Ausführungsbeispiele der Erfindung dargestellt. Es zeigen:
- Fig. 1: schematisch eine Gieß-Walz-Anlage für die Herstellung eines Stahlbandes gemäß einer ersten Ausführungsform,
- Fig. 2: schematisch die Gieß-Walz-Anlage nach Fig. 1 gemäß einer zweiten Ausführungsform,
- Fig. 3: schematisch die Gieß-Walz-Anlage nach Fig. 1 gemäß einer dritten Ausführungsform und
- Fig. 4: in perspektivischer Darstellungen einen Induktor zur Erhitzung eines Bandes.

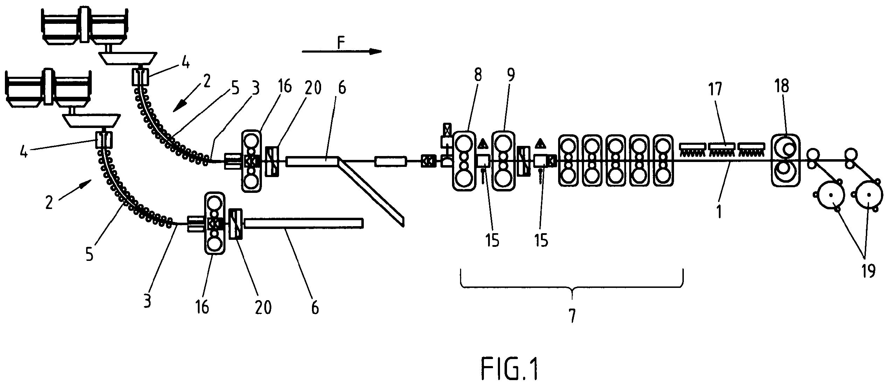

In Fig. 1 ist eine Gieß-Walz-Anlage skizziert, die als zentrale Elemente eine Gießmaschine 2, einen in Förderrichtung F nachfolgend angeordneten Ofen 6 und eine weiterhin nachfolgende Walzstraße 7 aufweist. Das Metallband 1, das in der Walzstraße 7 gewalzt wird, wird aus einer Bramme 3 hergestellt, die in der Gießmaschine 2 mittels einer Kokille 4 gegossen wird. In einer Strangführung 5 wird die gegossene Bramme von der Vertikalen in die Horizontale umgelenkt. Wie zu erkennen ist, sind vorliegend zwei parallel arbeitende Gießmaschinen 2 vorgesehen.

Im Ausführungsbeispiel nach Fig. 1 weist die Walzstraße 7 zwei verstärkte Walzgerüste 8 und 9 auf. Wesentlich ist, dass zwischen den beiden Walzgerüsten 8 und 9 ein Induktor 15 angeordnet ist, der das passierende Metallband 1 in gewünschter Weise erwärmen kann.

Zwischen dem Walzgerüst 9 und dem folgenden Gerüst der Walzstraße 7 ist ein weiterer Induktor 15 angeordnet.

In Fig. 1 sind auch noch weitere Elemente der Anlage skizziert, nämlich ein Vorwalzgerüst 16 hinter der Gießmaschine 2 und dem Ofen 6 und eine hinter dem Vorwalzgerüst 16 angeordnete Schere 20.

Hinter der Walzstraße 7 befindet sich eine Kühlstrecke 17, in Förderrichtung F folgend eine fliegende Schere 18 und schließlich zwei Haspel 19.

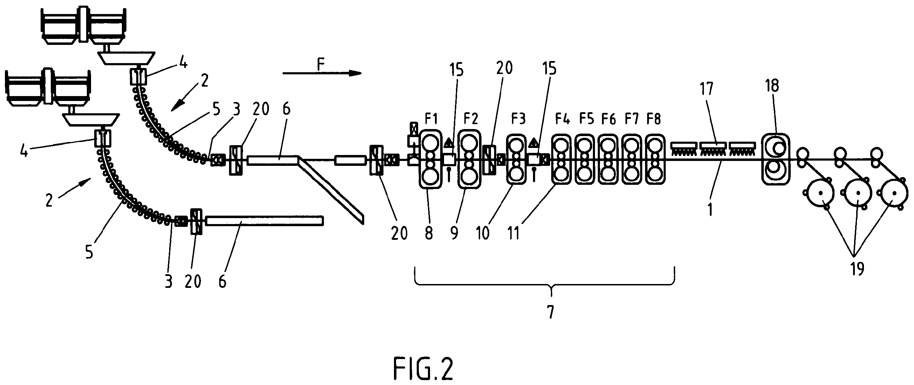

Das Ausführungsbeispiel nach Fig. 2 unterscheidet sich hiervon im wesentlichen dadurch, dass hier in der Walzstraße 7 sowohl zwischen den Walzgerüsten 8 und 9 als auch zwischen den Walzgerüsten 10 und 11 jeweils ein Induktor 15 angeordnet ist.

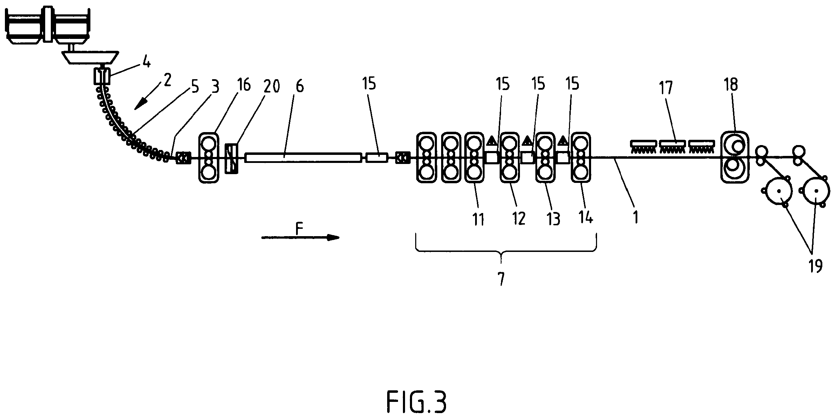

Bei der Lösung nach Fig. 3 befinden sich in der Walzstraße 7 verschiedene Walzgerüste, wobei zwischen den Walzgerüsten 11 und 12, zwischen den Walzgerüsten 12 und 13 und zwischen den Walzgerüsten 13 und 14 je ein Induktor 15 angeordnet ist.

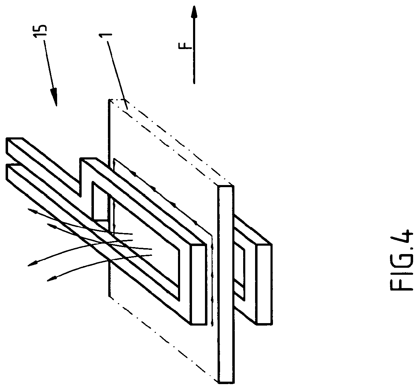

In Fig. 4 ist die bevorzugte Bauweise eines Elements aus solch einem Induktor 15 perspektivisch dargestellt. Zu erkennen ist, wie das Metallband 1 in Förderrichtung F den Induktor 15 passiert. Der Induktor weist hier offene, teilbare, C-förmige Induktionsspulen auf, die für eine Erhitzung des Metallbandes 1 sehr tauglich sind.

Bei Brammen bzw. Zwischenbändern zwischen 6 und 80 mm Dicke empfiehlt sich die Induktion per Längsfeld. Bei Brammen bzw. Zwischenbändern zwischen 1 und 9 mm Dicke empfiehlt sich die Induktion per Querfeld. Dies gilt für alle Betriebsmodi, die in den dargestellten Anlagen gefahren werden soll, d. h. für den Batch-Betrieb, für den Endlos-Betrieb und für den Semi-Endlos-Betrieb.

### Bezugszeichenliste:

- 1: Metallband
- 2: Gießmaschine
- 3: Bramme
- 4: Kokille
- 5: Strangführung
- 6: Ofen
- 7: Walzstraße
- 8: Walzgerüst
- 9: Walzgerüst
- 10: Walzgerüst
- 11: Walzgerüst
- 12: Walzgerüst
- 13: Walzgerüst
- 14: Walzgerüst
- 15: Induktor
- 16: Vorwalzgerüst
- 17: Kühlstrecke
- 18: Schere
- 19: Haspel
- 20: Schere
- F: Förderrichtung

## Patentansprüche

1. Verfahren zum Herstellen eines Metallbandes (1) durch Gießwalzen, bei dem zunächst in einer Gießmaschine (2) eine Bramme (3) durch Ausbringen von Metall aus einer Kokille (4) gegossen wird, wobei die Bramme (3) im Bereich einer Strangführung (5) von der Vertikalen in die Horizontale umgelenkt wird, wobei die Bramme (3) anschließend in einem Ofen (6) temperiert wird, wobei die Bramme (3) hinter dem Ofen (6) in einer Walzstraße (7) gewalzt wird, wobei die Bramme (3) in Abhängigkeit von einer vorgegebenen Betriebsweise entweder im diskontinuierlichen Batch-Betrieb oder im Endlos- bzw. Semi-Endlos-Betrieb bearbeitet wird, wobei die zu walzende Bramme (3) bzw. das walzende Metallband (1) im Bereich der Walzstraße (7) zumindest zwischen zwei Walzgerüsten (8, 9, 10, 11, 12, 13, 14) einer Erhitzung mittels eines Induktors (15) unterzogen wird,
**dadurch gekennzeichnet,**
**dass** als Induktor (15) ein Element verwendet wird, das mindestens eine offene, teilbare, C-förmige Induktionsspule umfasst, wobei der Induktor (15) ausgebildet ist, um die in Förderrichtung (F) vorbeigeführte Bramme (3) oder das Metallband (1) durch induktive Quer- oder Längsfelderwärmung zu erhitzen, wobei die Induktionsspulen der Induktoren, je nach Bedarf, zur Erzeugung von Längs- oder Querfeldinduktion geschaltet werden.

2. Verfahren nach Anspruch 1, **dadurch gekennzeichnet, dass** die Walzstraße (7) eine Tandem-Walzstraße ist, wobei eine Erhitzung mittels des Induktors (15) zwischen den in Förderrichtung (F) ersten beiden Walzgerüsten (8, 9) der Tandem-Walzstraße erfolgt.

3. Verfahren nach Anspruch 1 bis 2, **dadurch gekennzeichnet, dass** die Walzstraße (7) eine Tandem-Walzstraße ist, wobei eine Erhitzung mittels des Induktors (15) zwischen den in Förderrichtung (F) ersten drei Walzgerüsten (8, 9, 10) der Tandem-Walzstraße erfolgt.

4. Verfahren nach einem der Ansprüche 1 bis 3, **dadurch gekennzeichnet, dass** die Bramme (3) im Bereich der Strangführung (5) durch eine Anzahl von Rollen einer Dickenreduktion unterzogen wird.

5. Verfahren nach einem der Ansprüche 1 bis 4, **dadurch gekennzeichnet, dass** die Bramme (3) hinter der Gießmaschine (2) und vor dem Ofen (6) in einem Vorwalzgerüst (16) einer Dickenreduktion unterzogen wird.

6. Verfahren nach einem der Ansprüche 1 bis 5, **dadurch gekennzeichnet, dass** im Batch-Betrieb ein Trennen der Bramme (3) vor der Walzstraße erfolgt, vorzugsweise spätestens nach bis zu fünf der Walzstraße voranstehenden Vorwalzgerüsten.

7. Verfahren nach einem der Ansprüche 1 bis 6, **dadurch gekennzeichnet, dass** im Endlos-Betrieb ein Trennen der Bramme (3) nach dem letzten Gerüst der Walzstraße erfolgt.

8. Verfahren nach einem der Ansprüche 1 bis 7, **dadurch gekennzeichnet, dass** im Semi-Endlos-Betrieb ein Trennen der Bramme (3) vor dem Ofen (6) erfolgt, vorzugsweise spätestens nach fünf dem Ofen (6) voranstehenden Vorwalzgerüsten.

9. Verfahren nach einem der Ansprüche 1 bis 8, **dadurch gekennzeichnet, dass** vor und/oder nach dem Ofen ein Induktor vorgesehen ist.

## Claims

1. Method of producing a metal strip (1) by casting and rolling, in which initially a slab (3) is cast in a casting machine (2) by output of metal from a mould (4), wherein the slab (3) is deflected from the vertical to the horizontal in the region of a strip guide (5), wherein the slab (3) is subsequently subjected to temperature control in a furnace (6), wherein the slab (3) is rolled downstream of the furnace (6) in a rolling train (7), wherein the slab (3) is processed either in discontinuous batch operation or in endless or semi-endless operation depending on a predetermined mode of operation and wherein the slab (3) to be rolled or the metal strip (1) being rolled is subjected in the region of the rolling train (7) at least between two roll stands (8, 9, 10, 11, 12, 13, 14) to heating by means of an inductor (15),
**characterised in that**
an element comprising at least one open, divisible, C-shaped induction coil is used as inductor (15), wherein the inductor (15) is constructed so as to heat the slab (3) or metal strip (1), which is led past in conveying direction (F), by inductive transverse or longitudinal field heating and wherein the induction coils of the inductor are switched for generating longitudinal field induction or transverse field induction depending on the respective need.

2. Method according to claim 1, **characterised in that** the rolling train (7) is a tandem rolling train, wherein heating by means of the inductor (15) is carried out between the first two roll stands (8, 9) of the tandem rolling train in the conveying direction (F).

3. Method according to claim 1 or 2, **characterised in that** the rolling train (7) is a tandem rolling train, wherein heating is carried out by means of the inductor (15) between the first three roll stands (8, 9, 10) of the tandem rolling train in the conveying direction (F).

4. Method according to any one of claims 1 to 3, **characterised in that** the slab (3) is subjected to a thickness reduction in the region of the strip guide (5) by a number of rollers.

5. Method according to any one of claims 1 to 4, **characterised in that** the slab (3) is subjected to a thickness reduction in a roughing roll stand (16) downstream of the casting machine (2) and upstream of the furnace (6).

6. Method according to any one of claims 1 to 5, **characterised in that** in batch operation a separation of the slab (3) is carried out upstream of the rolling train, preferably at the latest after to up to five roughing roll stands preceding the rolling train.

7. Method according to any one of claims 1 to 6, **characterised in that** in endless operation a separation of the slab (3) is carried out after the last stand of the rolling train.

8. Method according to any one of claims 1 to 7, **characterised in that** in semi-endless operation a separation of the slab (3) is carried out upstream of the furnace (6), preferably at the latest after five roughing roll stands preceding the furnace (6).

9. Method according to any one of claims 1 to 8, **characterised in that** an inductor is provided upstream and/or downstream of the furnace.

## Revendications

1. Procédé de fabrication d'une bande métallique (1) par coulée-laminage, dans lequel on coule d'abord dans une machine de coulée (2) une brame (3) en prélevant du métal d'une lingotière (4), dans lequel la brame (3) est redirigée dans une zone de guidage de barre de coulée (5) continue en la faisant passer de la verticale à l'horizontale ; dans lequel la brame (3) est ensuite soumise à un traitement thermique dans un four (6) ; dans lequel la brame (3) est soumise à un laminage derrière le four (6) dans un train de laminage (7) ; dans lequel la brame (3) est traitée, en fonction d'un mode opératoire prédéfini, soit dans un fonctionnement par lots en discontinu, soit dans un fonctionnement sans fin, respectivement semi-continu ; dans lequel la brame (3) qui doit être laminée, respectivement la bande métallique (1) à laminer, est soumise, dans la zone du train de laminage (7) au moins entre deux cages de laminoir (8, 9, 10, 11, 12, 13, 14) à un chauffage au moyen d'un inducteur (15), **caractérisé en ce qu'**on utilise à titre d'inducteur (15), un élément qui comprend au moins une bobine d'induction ouverte, divisible, en forme de C, dans lequel l'inducteur (15) est réalisé pour chauffer la brame (3) ou la bande métallique (1) que l'on fait défiler devant, dans la direction de transport, par échauffement via un flux inductif transversal ou longitudinal, dans lequel les bobines d'induction des inducteurs peuvent être soumises à une commutation, en fonction des nécessités, pour générer une induction par flux longitudinal ou transversal.

2. Procédé selon la revendication 1, **caractérisé en ce que** le train de laminage (7) est un train de laminage de type tandem, dans lequel le réchauffement a lieu au moyen de l'inducteur (15) entre les deux premières cages de laminoir (8, 9), dans la direction de transport (F), du train de laminage de type tandem.

3. Procédé selon la revendication 1 ou 2, **caractérisé en ce que** le train de laminage (7) est un train de laminage de type tandem, dans lequel le réchauffement a lieu au moyen de l'inducteur (15) entre les trois premières cages de laminoir (8, 9, 10), dans la direction de transport (F), du train de laminage de type tandem.

4. Procédé selon l'une quelconque des revendications 1 à 3, **caractérisé en ce que** la brame (3), dans la zone de guidage de barre de coulée continue (5), est soumise à une réduction de son épaisseur via une série de cylindres.

5. Procédé selon l'une quelconque des revendications 1 à 4, **caractérisé en ce que** la brame (3), derrière la machine de coulée (2) et avant le four (6), est soumise à une réduction de son épaisseur dans une cage de prélaminage (16).

6. Procédé selon l'une quelconque des revendications 1 à 5, **caractérisé en ce que**, dans le fonctionnement en discontinu, a lieu une séparation de la brame (3), avant le train de laminage, de préférence au plus tard après jusqu'à cinq cages de prélaminage précédant le train de laminage.

7. Procédé selon l'une quelconque des revendications 1 à 6, **caractérisé en ce que**, dans le fonctionnement sans fin, a lieu une séparation de la brame (3) après la dernière cage du train de laminage.

8. Procédé selon l'une quelconque des revendications 1 à 7, **caractérisé en ce que**, dans le fonctionnement en semi-continu, a lieu une séparation de la brame (3), avant le four (6), de préférence au plus tard après cinq cages de prélaminage précédant le four (6).

9. Procédé selon l'une quelconque des revendications 1 à 8, **caractérisé en ce qu'**un inducteur est prévu avant et/ou après le four.
